# EUROPEAN PATENT APPLICATION

(11) **EP 4 460 113 A1**
(43) Date of publication of application: **06.11.2024**
(21) Application number: 21969489.0
(22) Date of filing: 29.12.2021
(51) Int. Cl.: H04W 52/24

(54) **POWER REPORTING METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Pfitzner, Hannes
(86) International application number: PCT/CN2021/142686
(87) International publication number: WO 2023/123121

(57) **Abstract**

The present disclosure relates to a power reporting method and apparatus, and a storage medium. The power reporting method is applied to a terminal, and comprises: reporting P-MPR indication information, the P-MPR indication information being used for indicating at least one P-MPR, or being used for indicating at least one P-MPR and reference signal resource identification indication information corresponding to the at least one P-MPR. According to the present disclosure, a network device can explicitly receive the P-MPR and the reference signal resource identification indication information corresponding to the P-MPR, such that the transmission configuration indication state is determined, and the communication performance is improved.

## Description

### TECHNICAL FIELD

The present disclosure relates to a field of communication technologies, and particularly to a method and an apparatus for power reporting, and a storage medium.

### BACKGROUND

In the new radio (NR) technology, for example, when a communication band is in a frequency range 2 (FR2), beam-based transmission and reception are required to ensure coverage due to fast fading of a high-frequency channel.

In related art, when a terminal detects that to meet a maximum permissible exposure (MPE) requirement, a power management-maximum power reduction (P-MPR) needs to exceed a set MPE threshold, the terminal triggers reporting of P-MPR and/or power headroom report (PHR). Nevertheless, since a conventional terminal does not differentiate between a panel and a beam, the reporting of the P-MPR and/or a PHR is reported as a whole for the terminal.

### SUMMARY

To overcome the problems in the related technology, the present disclosure provides a method and an apparatus for power reporting, and a storage medium.

According to a first aspect of embodiments of the present disclosure, there is provided a method for power reporting. The method is applied to a terminal, and includes:

reporting P-MPR indication information; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

According to a second aspect of embodiments of the present disclosure, there is provided a method for power reporting. The method is applied to a network device, and includes:
obtaining P-MPR indication information reported by a terminal; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

According to a third aspect of embodiments of the present disclosure, there is provided an apparatus for power reporting. The apparatus includes:
a reporting unit, configured to report P-MPR indication information; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

According to a fourth aspect of embodiments of the present disclosure, there is provided an apparatus for power reporting. The apparatus includes:
an obtaining unit, configured to obtain P-MPR indication information reported by a terminal; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

According to a fifth aspect of embodiments of the present disclosure, there is provided an apparatus for power reporting. The apparatus includes:
a processor; and a memory for storing instructions executable by the processor.

The processor is configured to perform the method of the first aspect or any of the implementations of the first aspect.

According to a sixth aspect of embodiments of the present disclosure, there is provided an apparatus for power reporting. The apparatus includes:
a processor; and a memory for storing instructions executable by the processor.

The processor is configured to perform the method of the second aspect or any of the implementations of the second aspect.

According to a seventh aspect of embodiments of the present disclosure, there is provided a storage medium. The storage medium stores instructions. When the instructions in the storage medium are executed by a processor of a terminal, the terminal is enabled to perform the method of the first aspect or any of the implementations of the first aspect.

According to an eighth aspect of embodiments of the present disclosure, there is provided a storage medium. The storage medium stores instructions. When the instructions in the storage medium are executed by a processor of a network device, the network device is enabled to perform the method of the second aspect or any of the implementations of the second aspect.

The technical solution provided by embodiments of the present disclosure may include the following beneficial effect: the terminal reports the P-MPR indication information, which indicates the at least one P-MPR, or is configured to indicate the at least one P-MPR and the reference signal resource identification indication information corresponding to the at least one P-MPR, so that the network device can explicitly receive the P-MPR and the reference signal resource identification indication information corresponding to the P-MPR, such that the transmission configuration indication state is determined, and the communication performance is improved.

It should be understood that the above general description and the later detailed description are only exemplary and explanatory, and do not limit the present disclosure.

### BRIEF DESCRIPTION OF THE DRAWINGS

The accompanying drawings herein, which are incorporated into and constitute a part of the specification, illustrate embodiments consistent with the present disclosure, and together with the specification serve to explain the principles of the present disclosure.
FIG. 1 is a schematic diagram illustrating a wireless communication system according to an embodiment of the present disclosure.
FIG. 2 is a flowchart illustrating a method for power reporting according to an embodiment of the present disclosure.
FIG. 3 is a flowchart illustrating a method for power reporting according to an embodiment of the present disclosure.
FIG. 4 is a block diagram illustrating an apparatus for power reporting according to an embodiment of the present disclosure.
FIG. 5 is a block diagram illustrating an apparatus for power reporting according to an embodiment of the present disclosure.
FIG. 6 is a block diagram illustrating an apparatus for power reporting according to an embodiment of the present disclosure.
FIG. 7 is a block diagram illustrating an apparatus for power reporting according to an embodiment of the present disclosure.

### DETAILED DESCRIPTION

Reference will now be made in detail to exemplary embodiments, examples of which are illustrated in the accompanying drawings. When the following description refers to the accompanying drawings, the same numerals in different drawings refer to the same or similar elements unless otherwise indicated. The implementations described in the following exemplary examples do not represent all implementations consistent with the present disclosure.

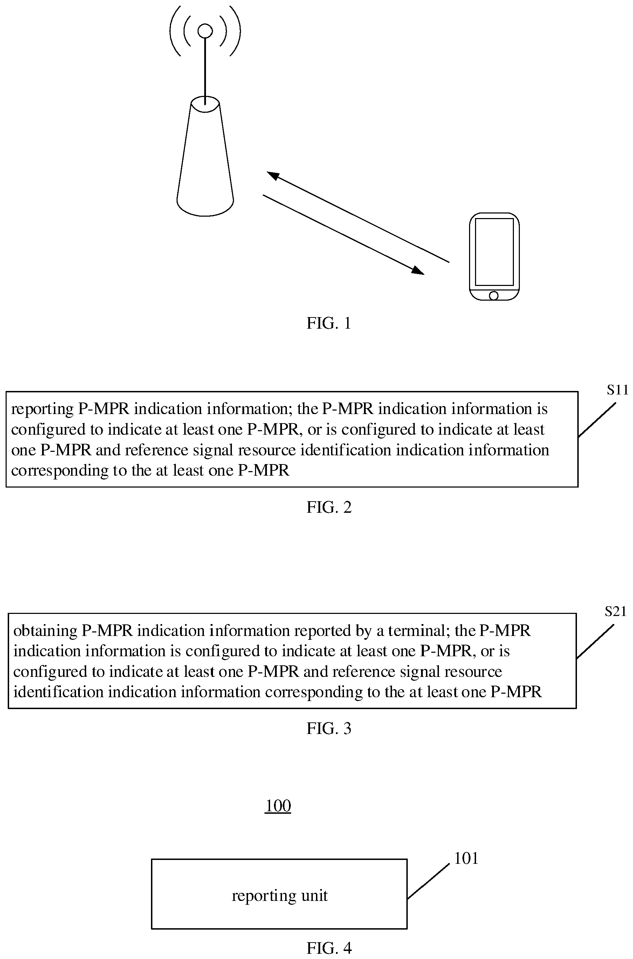

A method for power reporting according to embodiments of the present disclosure is applicable to a wireless communication system illustrated in FIG. 1. Referring to FIG. 1, the wireless communication system includes a terminal and a network device. The terminal is connected to the network device and performs data transmission and reception with the network device through wireless resources.

It should be understood that the wireless communication system in FIG. 1 is only for schematic illustration, and the wireless communication system may also include other network devices, such as a core network device, a wireless relay device, and a wireless backhaul device, which are not illustrated in FIG. 1. The number of network devices and the number of terminals in the wireless communication system are not limited according to embodiments of the present disclosure.

It should be further understood that the wireless communication system according to embodiments of the disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access with collision avoidance. The networks, according to capacities, speeds, delays, and other factors of different networks, may be divided into a second generation (2G) network, a third generation (3G) network, a fourth generation (4G) network, or a future evolution network, such as a fifth generation (5G) network, which may also be called a new radio (NR) network. For convenience of descriptions, the wireless communication network may be referred simply as a network sometimes in the present disclosure.

Further, the network device involved in the present disclosure may also be referred to as a wireless access network device. The wireless access network device may be a base station, an evolved node B (eNB), a home base station, an access point (AP) in a wireless fidelity (WiFi) system, a wireless relay node, a wireless backhaul node, a transmission point (TP), a transmission and reception point (TRP), or the like; may also be a next generation base station (gNB) in an NR system; and may also be a component or a part of device that constitutes a base station. When it is a vehicle-to-everything (V2X) communication system, the network device may also be a vehicle-mounted device. It should be understood that the specific technology and specific device form adopted by the network device are not limited in embodiments of the present disclosure.

Further, the terminal according to the present disclosure may also be referred to as a terminal device, a user equipment (UE), a mobile station (MS), a mobile terminal (MT), or the like. The terminal may be a device providing voice and/or data connectivity for a user. For example, the terminal may be a handheld device with a wireless connection function, a vehicle-mounted device, or the like. Currently, some examples of the terminal are: mobile phones, pocket personal computers (PPCs), palmtop computers, personal digital assistants (PDAs), laptops, tablets, wearable devices, vehicle-mounted devices, or the like. In addition, when it is a V2X communication system, the terminal device may also be a vehicle-mounted device. It should be understood that the specific technology and specific device form adopted by the terminal are not limited in embodiments of the present disclosure.

Beam-based data transmission is performed between the network device and the terminal in the present disclosure. During the beam-based data transmission, the network device (for example, the base station) may use a plurality of panels to send PDCCH to the terminal.

When the terminal monitors that there is a need to make a P-MPR larger than a set MPE threshold in order to meet an MPE requirement, the terminal triggers reporting of a P-MPR and/or a PHR. However, since a conventional terminal does not differentiate between a panel and a beam, the reporting of the P-MPR and/or the PHR is reported as a whole for the terminal.

Currently, when the terminal has a plurality of panels available for uplink communication, the terminal may perform P-MPR and/or PHR reporting based on the panel or the beam. For example, the terminal may report up to N P-MPRs, each of which corresponds to at most one available reference signal resource identification indication information. The reference signal resource identification indication information may be a synchronization signal and PBCH block resource indicator (SSBRI) or a channel state information-reference signal resource indicator (CRI).

However, in the current reporting scheme of the P-MPR and/or PHR performed based on the panel or the beam, the following scenarios occur:
(1) Since only the terminal can determine the number of SSBRIs/CRIs to be used for the uplink beam, when the number of available SSBRIs/CRIs is less than N, continuing to report P-MPR results in a waste of signaling overhead.
(2) If the terminal has multiple panels or beams where MPE occurs, the situation where the terminal reports multiple P-MPRs and the multiple P-MPRs do not have corresponding available SSBRI/CRIs will also result in a waste of signaling overhead.
(3) When the terminal reports the P-MPRs and the corresponding available SSBRIs/CRIs, since measured values of the SSBRIs/CRIs will not be reported, this results in that the network device is not able to determine which of the multiple SSBRIs/CRIs received has the best uplink performance.

Accordingly, the problem of signaling overhead waste caused by the panel-based or beam-based PHR reporting is a problem to be addressed.

Accordingly, in order to achieve better selection of uplink panel/beam while reducing the signaling overhead for reporting, the present disclosure proposes to report P-MPR indication information when an MPE requirement is measured to be satisfied and a P-MPR is greater than or equal to an MPE threshold, the P-MPR indication information is configured to indicate at least one P-MPR, or is configured to indicate at least one P-MPR and reference signal resource identification indication information corresponding to the at least one P-MPR, so that the network device can explicitly receive the P-MPR and/or the reference signal resource identification indication information corresponding to the P-MPR, improving the transmission performance.

Referring to FIG. 2, FIG. 2 is a flowchart illustrating a method for power reporting according to an embodiment of the present disclosure. As shown in FIG. 2, a method for power reporting is applied to a terminal, and includes the following step.

Step S11, P-MPR indication information is reported.

The P-MPR indication information is configured to indicate at least one P-MPR, or is configured to indicate at least one P-MPR and reference signal resource identification indication information corresponding to the at least one P-MPR.

In one embodiment of the present disclosure, the terminal may report the P-MPR indication information in response to measuring that the MPE requirement is met and the P-MPR is greater than or equal to an MPE threshold. Meeting the MPE requirement may be referred to as an occurrence of the MPE. The occurrence of the MPE can be understood as detecting by the terminal that if transmission power is not reduced by more than a threshold value, a radiation amount of at least one beam or panel would exceed the MPE, i.e., the MPE requirement cannot be met.

In the present disclosure, the terminal needs to perform a P-MPR adjustment to meet the MPE requirement. The P-MPR is required to be greater than or equal to the MPE threshold.

In the present disclosure, the MPE threshold can be understood to as a corresponding P-MPR value to keep the radiation of the beam and/or panel of the terminal from exceeding the MPE.

The reference signal resource identification indication information involved in the present disclosure may be an SSBRI or may be a CRI.

In the present disclosure, in a case that the terminal measures there is a need to make the P-MPR greater than or equal to the MPE threshold to meet the MPE requirement, the terminal reports the P-MPR indication information, the P-MPR indication information indicates at least one P-MPR, or indicates at least one P-MPR and reference signal resource identification indication information corresponding to the at least one P-MPR, so that the terminal can perform the reporting of the P-MPR, or the P-MPR and the reference signal resource identification indication information according to the actual situation, which enables the network device to clarify the P-MPR and the reference signal resource identification indication information reported by the terminal, realizing a better selection of the panel or the beam, and improving the communication performance.

In the present disclosure, in order to reduce the signaling overhead of the reporting, the at least one P-MPR indicated by the P-MPR indication information includes a P-MPR that is greater than or equal to the MPE threshold. Hereinafter, the P-MPR that is greater than or equal to the MPE threshold is referred to as a first P-MPR.

In the present disclosure, in order to further reduce the signaling overhead of the reporting, the number of the first P-MPR included in the at least one P-MPR indicated by the P-MPR indication information is one. That is, the terminal reports at most one first P-MPR with a P-MPR value greater than or equal to the MPE threshold.

In the present disclosure, the first P-MPR does not have corresponding reference signal resource identification indication information. For example, the first P-MPR does not have a corresponding SSBRI/CRI.

In one embodiment of the present disclosure, the P-MPR indication information reported by the terminal may be configured to indicate whether another P-MPR (hereinafter referred to as a second P-MPR) different from the first P-MPR exists, or may be configured to indicate whether a reference signal resource identification corresponding to the second P-MPR exists. In the present disclosure, for convenience of description, the indication information, configured to indicate whether the second P-MPR and/or the reference signal resource identification corresponding to the second P-PMR exists, is referred to as existence indication information.

In another embodiment of the present disclosure, the P-MPR indication information reported by the terminal may be configured to indicate the second P-MPR or may be configured to indicate the reference signal resource identification indication information corresponding to the second P-PMR.

To sum up, the P-MPR indication information reported by the terminal may be configured to indicate at least one of:
A: the existence indication information, in which the existence indication information is configured to indicate whether the second P-PMR and/or the reference signal resource identification corresponding to the second P-MPR exists;
B: the second P-MPR; or
C: the reference signal resource identification indication information corresponding to the second P-PMR.

For example, in an implementation of the embodiment of the present disclosure, the existence indication information indicates existence, and the P-MPR indication information indicates the second P-MPR and the reference signal resource identification corresponding to the second P-MPR.

In response to determining the existence of the reference signal resource identification corresponding to the second P-MPR, the existence indication information indicates the existence, and the P-MPR indication information indicates the second P-MPR and the reference signal resource identification corresponding to the second P-MPR.

For another example, in another implementation of the present disclosure, the existence indication information indicates non-existence.

In response to determining the non-existence of the reference signal resource identification corresponding to the second P-MPR, the existence indication information indicates the non-existence.

In the present disclosure, in response to determining the non-existence of the reference signal resource identification corresponding to the second P-MPR, the terminal may report P-MPR indication information which does not contain the second P-MPR and does not contain the reference signal resource identification corresponding to the second P-MPR, to save signaling overhead for reporting the P-MPR.

In the present disclosure, in response to determining the existence of the second P-MPR, the second P-MPR may be reported; in response to determining the existence of the reference signal resource identification corresponding to the second P-MPR, the second P-MPR and the reference signal resource identification corresponding to the second P-MPR may be reported.

In an implementation, the P-MPR indication information is configured to indicate N second P-MPRs, and a reference signal resource identification corresponding to each of the N second P-MPRs, where N is an integer greater than 0.

In the present disclosure, in a case that the terminal reports the N second P-MPRs and the reference signal resource identification indication information corresponding to each of the N second P-MPRs, the terminal reports the N second P-MPRs and the reference signal resource identification corresponding to each of the N second P-MPRs in a certain reporting order.

In the present disclosure, according to the reporting order of the N second P-MPRs and the reference signal resource identification corresponding to each of the N second P-MPRs, a bit position occupied by the reference signal resource identification indication information may be determined. For example, in the present disclosure, the N second P-MPRs and the reference signal resource identification corresponding to each of the N second P-MPRs may be reported in an order of bit positions from low to high. Alternatively, in the present disclosure, the N second P-MPRs and the reference signal resource identification corresponding to each of the N second P-MPRs may be reported in an order of bit positions from high to low.

Bit positions occupied by the N second P-MPRs and the reference signal resource identification indication information corresponding to each of the N second P-MPRs that are included in the P-MPR indication information, are determined based on a predetermined rule.

In an implementation, the predetermined rule is determined based on at least one of:
A: a value size of the second P-MPR.
In an example, the smaller the second P-MPR value, the higher the reporting order.
B: a reference signal receiving power (RSRP) corresponding to the reference signal resource identification.

In an example of the present disclosure, the reporting order of the second P-MPRs and the reference signal resource identification indication information corresponding to the second P-MPRs may be determined based on a layer 1 (L1) or an L3-RSRP.

In an example of the present disclosure, the larger the L1-RSRP value, the higher the reporting order.

C: a signal to interference noise ratio (SINR) corresponding to the reference signal resource identification.

In an example of the present disclosure, the larger the L1-SINR or L3-SINR value, the higher the reporting order.

D: a difference between a RSRP corresponding to the reference signal resource identification and a value of the corresponding second P-MPR.

In an example, the larger the difference between the L1-RSRP and the corresponding second P-MPR value or the larger the difference between the L3-RSRP and the corresponding second P-MPR value, the higher the reporting order.

E: a difference between a SINR corresponding to the reference signal resource identification and a value of the corresponding second P-MPR.

In an example, the larger the difference between the L1-SINR and the corresponding second P-MPR value or the larger the difference between the L3-SINR and the corresponding second P-MPR value, the higher the reporting order.

F: a power headroom corresponding to the reference signal resource identification.

In an example, the larger the power headroom value, the higher the reporting order.

G: a sum of an RSRP and a power headroom corresponding to the reference signal resource identification.

In an example, the larger the sum of the L1-RSRP and the power headroom corresponding to the reference signal resource identification or the larger the sum of the L3-RSRP and the power headroom corresponding to the reference signal resource identification, the higher the reporting order.

H: a sum of an SINR and a power headroom corresponding to the reference signal resource identification.

In an example, the larger the sum of the L1-SINR and the power headroom corresponding to the reference signal resource identification or the larger the sum of the L3-SINR and the power headroom corresponding to the reference signal resource identification, the higher the reporting order.

The reporting order being higher mentioned above in the present disclosure, may be understood as follows:

On the one hand, in a case that the reporting order is to report the N second P-MPRs and the reference signal resource identification indication information corresponding to each of the N second P-MPRs in the order of bit positions from low to high, the second P-MPR and/or the reference signal resource identification indication information corresponding to the second P-MPR with the higher reporting order occupies a lower bit position.

On the other hand, in a case that the reporting order is to report the N second P-MPRs and the reference signal resource identification indication information corresponding to each of the N second P-MPRs in the order of bit positions from high to low, the second P-MPR and/or the reference signal resource identification indication information corresponding to the second P-MPR with the higher reporting order occupies a higher bit position.

Based on the method for reporting power provided above in the present disclosure, the terminal reports at most one first P-MPR with the P-MPR value greater than or equal to the MPE threshold, and the first P-MPR does not have corresponding reference signal resource identification indication information ( such as SSBRI/CRI). For other second P-MPR, if there is no reference signal resource identification indication information (such as SSBRI/CRI) available for that second P-MPR, no second P-MPR and corresponding reference signal resource identification indication information are fed back. If there is available reference signal resource identification indication information (such as SSBRI/CRI) for this second P-MPR, the second P-MPR and the corresponding reference signal resource identification indication information (such as SSBRI/CRI) are fed back. In a case that the terminal reports the second P-MPR and the corresponding reference signal resource identification indication information, the terminal feeds back according to a certain order of performance parameters, so as to provide a reference to the network device for selecting better reference signal resource identification indication information (such as SSBRI/CRI) as an uplink transmission configuration indicator (TCI) state.

Table 1 below shows a format of P-MPR indication information illustrated in an exemplary embodiment of the present disclosure. Referring to Table 1, P-MPR#1 is a value greater than or equal to the MPE threshold and no SSBRI/CRI is available, where R refers to a reserve. For P-MPR#2 and P-MPR#3 with values both less than the MPE threshold and for which the available SSBRI/CRI exists, the corresponding existence indication information (AC value) indicates existence. The bit positions of P-MPR#2 and SSBRI/CRI#1 are higher than those of P-MPR#3 and SSBRI/CRI due to the fact that a certain performance parameter (e.g., RSRP, SINR, power headroom, etc.) of SSBRI/CRI#1 is better than that of SSBRI/CRI#2.

**Table 1**

| **R** | **P-MPR#1** | **R** |
|---|---|---|
| AC | P-MPR#2 | SSBRI/CRI#1 |
| AC | P-MPR#3 | SSBRI/CRI#2 |

The present disclosure provides a method for power reporting. By designing the reporting method of the P-MPR and the corresponding SSBRI/CRI, the signaling overhead is reduced while more reference information is provided for the network device, which facilitates the network device to select a more appropriate SSBRI/CRI as the uplink TCI state, thereby improving the uplink transmission performance.

Based on the same idea, the present disclosure provides a method for reporting power, applied to the network device.

Referring to FIG. 3, FIG. 3 is a flowchart illustrating a method for power reporting according to an embodiment of the present disclosure. As shown in FIG. 3, the method for power reporting is applied to a network device, and includes the following step.

Step S21, the P-MPR indication information reported by a terminal is obtained.

The P-MPR indication information is configured to indicate at least one P-MPR, or is configured to indicate at least one P-MPR and reference signal resource identification indication information corresponding to the at least one P-MPR.

In the present disclosure, the P-MPR indication information may be reported in response to measuring by the terminal that the MPE requirement is met and the P-MPR is greater than or equal to an MPE threshold. Meeting the MPE requirement may be referred to as an occurrence of the MPE. The occurrence of the MPE can be understood as detecting by the terminal that if transmission power is not reduced by more than a threshold value, a radiation amount of at least one beam or panel would exceed the MPE, i.e., the MPE requirement cannot be met.

In an implementation, the at least one P-MPR indicated by the P-MPR indication information includes a first P-MPR. The first P-MPR is greater than or equal to an MPE-threshold.

In the present disclosure, in order to further reduce the signaling overhead of the reporting, the number of the first P-MPR included in the at least one P-MPR indicated by the P-MPR indication information is one.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR;
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In response to the existence indication information indicating the existence, and the P-MPR indication information indicating the second P-MPR and the reference signal resource identification corresponding to the second P-MPR, the network device determines that the second P-MPR exists, and that the second P-MPR has the corresponding reference signal resource identification.

In an implementation, the existence indication information indicates non-existence.

In response to the existence indication information indicates non-existence, the network device determines that the second P-MPR does not exist and the corresponding reference signal resource identification does not exist.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR are determined based on a predetermined rule.

The predetermined rule is determined based on at least one of:

In an implementation, the predetermined rule is determined based on at least one of:
A: a value size of the second P-MPR.

In an example, the smaller the second P-MPR value, the higher the reporting order.

B: an RSRP corresponding to the reference signal resource identification.

In an example of the present disclosure, the reporting order of the second P-MPR and the reference signal resource identification indication information corresponding to the second P-MPR may be determined based on a layer 1 (L1) or L3-RSRP.

In an example of the present disclosure, the larger the L1-RSRP value, the higher the reporting order.

C: an SINR corresponding to the reference signal resource identification.

In an example of the present disclosure, the larger the L1-SINR or L3-SINR value, the higher the reporting order.

D: a difference between an RSRP corresponding to the reference signal resource identification and a value of the corresponding second P-MPR.

In an example, the larger the difference between the L1-RSRP and the corresponding second P-MPR value or the larger the difference between the L3-RSRP and the corresponding second P-MPR value, the higher the reporting order.

E: a difference between a SINR corresponding to the reference signal resource identification and a value of the corresponding second P-MPR.

In an example, the larger the difference between the L1-SINR and the corresponding second P-MPR value or the larger the difference between the L3-SINR and the corresponding second P-MPR value, the higher the reporting order.

F: a power headroom corresponding to the reference signal resource identification.

In an example, the larger the power headroom value, the higher the reporting order.

G: a sum of an RSRP and a power headroom corresponding to the reference signal resource identification.

In an example, the larger the sum of the L1-RSRP and the power headroom corresponding to the reference signal resource identification or the larger the sum of the L3-RSRP and the power headroom corresponding to the reference signal resource identification, the higher the reporting order.

H: a sum of an SINR and a power headroom corresponding to the reference signal resource identification.

In one example, the larger the sum of the L1-SINR and the power headroom corresponding to the reference signal resource identification or the larger the sum of the L3-SINR and the power headroom corresponding to the reference signal resource identification, the higher the reporting order.

The reporting order being higher mentioned above in the present disclosure, may be understood as follows:

On the one hand, in a case that the reporting order is to report the N second P-MPRs and the reference signal resource identification indication information corresponding to each of the N second P-MPRs in the order of bit positions from low to high, the second P-MPR and/or the reference signal resource identification indication information corresponding to the second P-MPR with the higher reporting order occupies a lower bit position.

On the other hand, in a case that the reporting order is to report the N second P-MPRs and the reference signal resource identification indication information corresponding to each of the N second P-MPRs in the order of bit positions from high to low, the second P-MPR and/or the reference signal resource identification indication information corresponding to the second P-MPR with the higher reporting order occupies a higher bit position.

The method for power reporting provided by the present disclosure, by designing the reporting method of the P-MPR and the corresponding SSBRI/CRI, reduces signaling overhead while provides more reference information to the network device, which facilitates the network device to select a more appropriate SSBRI/CRI as the uplink TCI state, thereby improving the uplink transmission performance.

It can be understood that the method for power reporting applied to the network device according to the embodiments of the present disclosure has similarities with the method for power reporting applied to the terminal. Therefore, the description of the method for power reporting applied to the network device is not exhaustive, reference can be made to the relevant contents of the method for power reporting applied to the terminal, which will not be described in detail herein.

It can be further understood that the method for power reporting provided according to the embodiments of the present disclosure is applicable to a process in which the terminal interacts with the network device to realize power reporting. For the process in which the terminal interacts with the network device to realize power reporting, the terminal and the network device have the relevant functions in the above embodiments.

It should be noted that those skilled in the art may understand that the various implementations/embodiments mentioned above according to the embodiments of the present disclosure may be used in conjunction with the above embodiments or may be used independently. Whether it is used alone or in conjunction with the above embodiments, its implementation principles are similar. During the implementation of the disclosure, some embodiments are described in the manner of being used together. Of course, those skilled in the art may understand that such an illustration is not a limitation to the embodiments of the disclosure.

Based on the same idea, an apparatus for power reporting is provided according to embodiments of the disclosure.

It should be understood that, in order to realize the above functions, the apparatus for reporting the PHR provided according to the embodiments of the disclosure includes corresponding hardware structures and/or software modules for performing various functions. Combining the units and algorithm steps of each example disclosed according the embodiments of the disclosure, the embodiments of the disclosure may be implemented in the form of hardware or a combination of hardware and computer software. Whether a certain function is executed by hardware or computer software driving hardware depends on the specific application and design constraints of the technical solutions. Those skilled in the art may use different manners to implement the described functions for each specific application, but such implementation should not be regarded as exceeding the scope of the technical solutions according to embodiments of the disclosure.

Referring to FIG. 4, FIG. 4 is a block diagram illustrating an apparatus for power reporting according to an embodiment of the present disclosure. As shown in FIG. 4, the apparatus for power reporting 100 includes a reporting unit 101. The apparatus for power reporting 100 may be provided as the terminal involved in the above described embodiments of the present disclosure.

The reporting unit 101 is configured to report P-MPR indication information; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

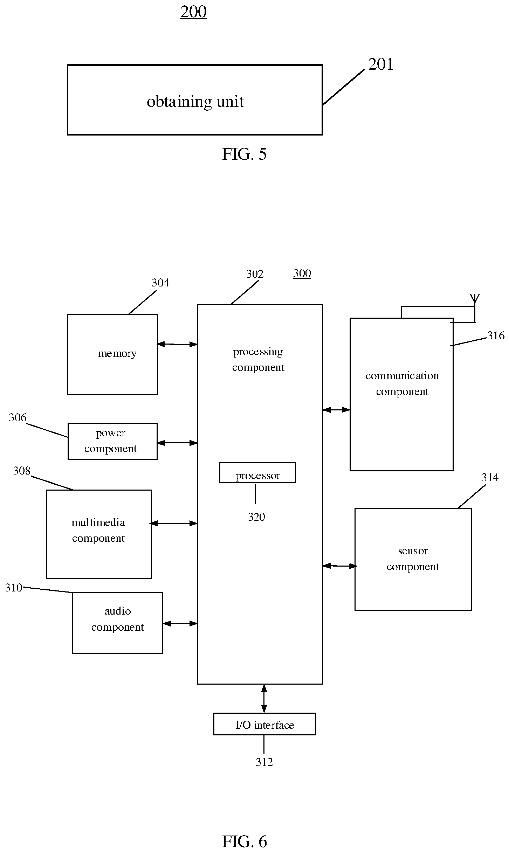

Referring to FIG. 5, FIG. 5 is a block diagram illustrating an apparatus for power reporting according to an embodiment of the present disclosure. As shown in FIG. 5, the apparatus for power reporting 200 includes an obtaining unit 201. The apparatus for power reporting 200 may be provided as the network device involved in the above described embodiments of the present disclosure.

The obtaining unit 201 is configured to obtain P-MPR indication information reported by a terminal; the P-MPR indication information is configured to indicate at least one P-MPR, or is configured to indicate at least one P-MPR and reference signal resource identification indication information corresponding to the at least one P-MPR.

In an implementation, the at least one P-MPR indicated by the P-MPR indication information includes a first P-MPR. The first P-MPR is greater than or equal to an MPE threshold.

In an implementation, the P-MPR indication information is configured to indicate at least one of:
A: existence indication information, in which the existence indication information is configured to indicate whether a second P-PMR and/or a reference signal resource identification corresponding to the second P-MPR exists;
B: a second P-MPR; or
C: reference signal resource identification indication information corresponding to a second P-PMR.

In an implementation, the existence indication information indicates existence, and the P-MPR indication information indicates the second P-MPR and the reference signal resource identification corresponding to the second P-MPR.

In an implementation, the existence indication information indicates non-existence.

In an implementation, the P-MPR indication information is configured to indicate N second P-MPRs, and a reference signal resource identification corresponding to each of the second P-MPRs, where N is an integer greater than 0.

In an implementation, bit positions occupied by the N second P-MPRs and the reference signal resource identification indication information corresponding to each second P-MPR that are included in the P-MPR indication information, are determined based on a predetermined rule.

In an implementation, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR ;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

With respect to the apparatuses according to the above embodiments, the specific manners in which each module performs operations have been described in detail in the embodiments of the methods, and will not be described in detail here.

Referring to FIG. 6, FIG. 6 is a block diagram illustrating an apparatus for power reporting according to an embodiment of the present disclosure. For example, the apparatus 300 may be provided as a terminal. For example, the apparatus 300 may be a mobile phone, a computer, a digital broadcast terminal, a messaging device, a gaming console, a tablet, a medical device, exercise equipment, a personal digital assistant, and the like.

Referring to FIG. 6, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive external multimedia data while the apparatus 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an open/closed status of the apparatus 300, relative positioning of components, e.g., the display and the keypad of the apparatus 300, the sensor component 314 may also detect a change in position of the apparatus 300 or a component of the apparatus 300, an existence or absence of user contact with the apparatus 300, an orientation or an acceleration/deceleration of the apparatus 300, and a change in temperature of the apparatus 300. The sensor component 314 may include a proximity sensor configured to detect the existence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as Wi-Fi, 2G, or 3G, or their combination. According to some embodiments, the communication component 316 receives a broadcast signal or broadcast associated information from an external broadcast management system via a broadcast channel. According to some embodiments, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

According to some embodiments, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

According to some embodiments, there is also provided a non-transitory computer-readable storage medium including instructions, such as included in the memory 304, executable by the processor 320 in the apparatus 300, for performing the above-described methods. For example, the non-transitory computer-readable storage medium may be a ROM, a RAM, a CD-ROM, a magnetic tape, a floppy disc, an optical data storage device, and the like.

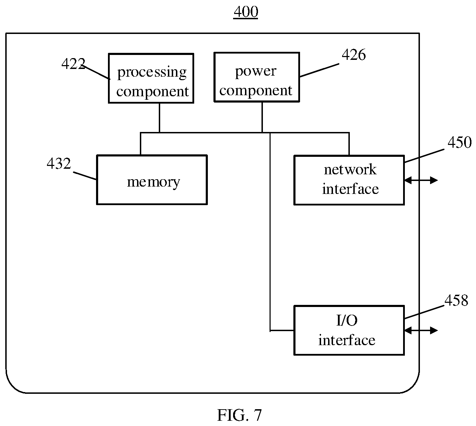

Referring to FIG. 7, FIG. 7 is a block diagram illustrating an apparatus for power reporting according to an embodiment of the present disclosure. For example, the apparatus 400 may be provided as a network device. Referring to FIG. 7, the apparatus 400 includes a processing component 422, which further includes one or more processors, and a memory resource represented by a memory 432 for storing instructions executable by the processing component 422, such as application programs. The application program stored in the memory 432 may include one or more modules each corresponding to a set of instructions. In addition, the processing component 422 is configured to execute instructions to perform the above methods.

The apparatus 400 may also include a power component 426 configured to perform power management of the apparatus 400, a wired or wireless network interface 450 configured to connect the apparatus 400 to the network, and an I/O interface 458. The apparatus 400 may operate based on an operating system stored in the memory 432, such as Windows Server^{™}, Mac OS X^{™}, Unix^{™}, Linux^{™}, FreeBSD^{™} or the like.

According to some embodiments, there is also provided a non-transitory computer-readable storage medium including instructions, such as the memory 432 including instructions that may be executed by the processing component 422 of the apparatus 400 to implement the above methods. For example, the non-transitory computer-readable storage medium may be a ROM, a RAM, a CD-ROM, a magnetic tape, a floppy disk, an optical data storage device, or the like.

It should be understood that "a plurality of" mentioned in the disclosure may refer to two or more, and other quantifiers are similar thereto. The term "and/or" may describe association relationships of associated objects, indicating that there may be three types of relationships. For example, A and/or B may mean: A exists alone, A and B exist at the same time, and B exists alone. The character "/" generally indicates that the associated objects before and after are in an "or" relationship.

It should be further understood that the terms "first", "second", etc. are used to describe various information, but the information should not be limited to these terms. These terms are only used to distinguish information of the same type from one another, and do not imply a specific order or degree of importance. In fact, expressions such as "first" and "second" may be used interchangeably. For example, without departing from the scope of the disclosure, first information may also be called second information, and similarly, second information may also be called first information.

It should be further understood that although operations are described in a specific order in the drawings according to the embodiments of the disclosure, it should not be understood as requiring that these operations be performed in the specific order illustrated or in a serial order, or that perform all operations illustrated to obtain the desired result. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the present disclosure following the general principles of the present disclosure and including common knowledge or conventional technical means in the technical field not disclosed in the present disclosure.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for power reporting, applied to a terminal, comprising:
reporting P-MPR indication information;
wherein the P-MPR indication information is configured to indicate at least one P-MPR, or is configured to indicate at least one P-MPR and reference signal resource identification indication information corresponding to the at least one P-MPR.

2. The method of claim 1, wherein the at least one P-MPR indicated by the P-MPR indication information comprises a first P-MPR, the first P-MPR being greater than or equal to an MPE threshold.

3. The method of claim 1 or 2, wherein the P-MPR indication information is configured to indicate at least one of:
existence indication information, wherein the existence indication information is configured to indicate whether a second P-PMR and/or a reference signal resource identification corresponding to the second P-MPR exists;
a second P-MPR; or
reference signal resource identification indication information corresponding to a second P-PMR.

4. The method of claim 3, wherein the existence indication information indicates existence, and the P-MPR indication information indicates the second P-MPR and the reference signal resource identification corresponding to the second P-MPR.

5. The method of claim 3, the existence indication information indicates non-existence.

6. The method of claim 4, the P-MPR indication information is configured to indicate N second P-MPRs, and a reference signal resource identification corresponding to each of the second P-MPRs, wherein N is an integer greater than 0.

7. The method of claim 6, bit positions occupied by the N second P-MPRs and the reference signal resource identification indication information corresponding to each second P-MPR that are comprised in the P-MPR indication information, are determined based on a predetermined rule.

8. The method of claim 7, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

9. A method for power reporting, applied to a network device, comprising:
obtaining P-MPR indication information reported by a terminal;
wherein the P-MPR indication information is configured to indicate at least one P-MPR, or is configured to indicate at least one P-MPR and reference signal resource identification indication information corresponding to the at least one P-MPR.

10. The method of claim 9, wherein the at least one P-MPR indicated by the P-MPR indication information comprises a first P-MPR, the first P-MPR being greater than or equal to an MPE threshold.

11. The method of claim 9 or 10, wherein the P-MPR indication information is configured to indicate at least one of:
existence indication information, wherein the existence indication information is configured to indicate whether a second P-PMR and/or a reference signal resource identification corresponding to the second P-MPR exists;
a second P-MPR; or
reference signal resource identification indication information corresponding to a second P-PMR.

12. The method of claim 11, further comprising:
the existence indication information indicates existence, and the P-MPR indication information indicates the second P-MPR and the reference signal resource identification corresponding to the second P-MPR.

13. The method of claim 11, further comprising:
the existence indication information indicates non-existence.

14. The method of claim 12, the P-MPR indication information is configured to indicate N second P-MPRs, and a reference signal resource identification corresponding to each of the second P-MPRs, wherein N is an integer greater than 0.

15. The method of claim 14, bit positions occupied by the N second P-MPRs and the reference signal resource identification indication information corresponding to each second P-MPR that are comprised in the P-MPR indication information, are determined based on a predetermined rule.

16. The method of claim 15, the predetermined rule is determined based on at least one of:
a value size of the second P-MPR;
a reference signal receiving power corresponding to the reference signal resource identification;
a signal to interference noise ratio corresponding to the reference signal resource identification;
a difference between a reference signal receiving power corresponding to the reference signal resource identification and a value of the corresponding second P-MPR;
a difference between a signal to interference noise ratio corresponding to the reference signal resource identification and a value of the corresponding second P-MPR;
a power headroom corresponding to the reference signal resource identification;
a sum of a reference signal receiving power and a power headroom corresponding to the reference signal resource identification; or
a sum of a signal to interference noise ratio and a power headroom corresponding to the reference signal resource identification.

17. An apparatus for power reporting, comprising:
a reporting unit, configured to report P-MPR indication information;
wherein the P-MPR indication information is configured to indicate at least one P-MPR, or is configured to indicate at least one P-MPR and reference signal resource identification indication information corresponding to the at least one P-MPR.

18. An apparatus for power reporting, comprising:
an obtaining unit, configured to obtain P-MPR indication information reported by a terminal;
wherein the P-MPR indication information is configured to indicate at least one P-MPR, or is configured to indicate at least one P-MPR and reference signal resource identification indication information corresponding to the at least one P-MPR.

19. An apparatus for power reporting, comprising:
a processor; and
a memory for storing instructions executable by the processor;
wherein the processor is configured to perform the method of any one of claims 1 to 8.

20. An apparatus for power reporting, comprising:
a processor; and
a memory for storing instructions executable by the processor ;
wherein the processor is configured to perform the method of any one of claims 9 to 16.

21. A storage medium storing instructions, wherein the instructions in the storage medium, when being executed by a processor of a terminal, enable the terminal to perform the method of any one of claims 1 to 8.

22. A storage medium storing instructions, wherein the instructions in the storage medium, when being executed by a processor of a network device, enable the network device to perform the method of any one of claims 9 to 16.
